# EUROPÄISCHE PATENTSCHRIFT

(11) **EP 2 537 682 B1**
(45) Veröffentlichungstag und Bekanntmachung des Hinweises auf die Patenterteilung: **06.01.2016**
(21) Anmeldenummer: 12172127.8
(22) Anmeldetag: 15.06.2012
(51) Int. Cl.: B44C 5/04

(54) **Vorimprägnat**
Prepreg
Agent de préimprégnation

(30) Priorität: 22.06.2011 DE 102011105676
(43) Veröffentlichungstag der Anmeldung: 26.12.2012
(73) Patentinhaber: Schoeller Technocell GmbH & Co. KG, 49086 Osnabrück (DE)
(72) Erfinder: Wicher, Martina, 49143 Bissendorf (DE)
(74) Vertreter: Cohausz & Florack

(56) Entgegenhaltungen:
- DE-A1- 10 046 770
- DE-A1- 19 612 483
- DE-A1-102005 005 205

## Beschreibung

### TECHNISCHES FELD DER ERFINDUNG

Die Erfindung betrifft Vorimprägnate und daraus erhältliche Dekorimprägnate oder dekorative Beschichtungswerkstoffe.

### HINTERGRUND DER ERFINDUNG

Dekorative Beschichtungswerkstoffe, sogenannte Dekorpapiere oder Dekorfolien, werden vorzugsweise zur Oberflächenbeschichtung bei der Möbelherstellung und im Innenausbau, insbesondere Laminatböden, eingesetzt. Unter Dekorpapier/Dekorfolie versteht man kunstharzgetränkte oder kunstharzgetränkte und oberflächenbehandelte, bedruckte oder unbedruckte Papiere. Dekorpapiere/Dekorfolien werden mit einer Trägerplatte verleimt oder verklebt.

Je nach Art des Imprägniervorgangs unterscheidet man zwischen Dekorpapieren/Dekorfolien mit durchimprägniertem Papierkern und sogenannten Vorimprägnaten, bei denen das Papier in der Papiermaschine online oder offline nur teilweise imprägniert wird. Keines der bislang bekannten Vorimprägnate, die formaldehydhaltige duroplastische Harze oder formaldehydarme acrylatische Bindemittel enthalten, erfüllt alle an sie gestellten Anforderungen wie gute hohe Spaltfestigkeit und gute Haftung nach dem Lackieren und Verkleben auf einer Holzwerkstoffplatte.

Für das Aufkleben der Dekorfolien auf Holzwerkstoffe wie Spanplatten oder MDF-Platte werden üblicherweise Harnstoffleime oder Polyvinylacetat (PVAC)-Leime eingesetzt. Diese führen nicht immer zu der gewünschten Verklebung der Dekorfolien.

Schichtpressstoffe (High Pressure Laminates) sind Laminate, die durch Verpressen mehrerer imprägnierter, aufeinander geschichteter Papiere entstehen. Der Aufbau dieser Schichtpressstoffe besteht im allgemeinen aus einem höchste Oberflächenbeständigkeit erzeugenden transparenten Auflageblatt (Overlay), einem harzgetränkten Dekorpapier und einem oder mehreren phenolbeharzten Kraftpapieren. Als Unterlage hierfür werden beispielsweise Hartfaser- und Holzspanplatten sowie Sperrholz eingesetzt.

Bei den nach dem Kurztaktverfahren hergestellten Laminaten (Low Pressure Laminates) wird das mit Kunstharz getränkte Dekorpapier direkt mit einer Unterlage, beispielsweise einer Spanplatte, unter Anwendung eines niedrigen Drucks verpresst.

An die Verklebbarkeit und die Haftung der aufgeklebten Dekorfolie werden in der verarbeitenden Industrie hohe Anforderungen gestellt. So muss die Haftung bereits unmittelbar nach dem Klebeprozess gut sein, um eine Beschädigung der frisch kaschierten Platte bei der weiteren Handhabung zu vermeiden. Die Platten werden häufig bereits wenige Minuten bis Stunden nach dem Verkleben der Dekorfolie durch Sägen, Fräsen und Bohren weiter bearbeitet, auch hierbei darf an den Bearbeitungskanten kein Ablösen oder Einreißen der aufgebrachten Dekorfolie auftreten. Weiterhin werden die fertiggestellten Oberflächen häufig für den weiteren Transport verpackt, wobei Klebebänder zum Einsatz kommen, die auch direkt auf die fertige dekorative Oberfläche aufgeklebt werden. Diese Klebebänder müssen eine ausreichende Klebekraft aufweisen, sie müssen sich nach dem Transport rückstandsfrei ablösen lassen, ohne dass die verklebte Dekorfolie beschädigt wird. Die Dekorfolie muss deshalb auch nach Verklebung eine hohe Spaltfestigkeit senkrecht zur dekorativen Oberfläche aufweisen.

Das bei den oben genannten Beschichtungswerkstoffen verwendete Dekorpapier wird weiß oder farbig mit oder ohne zusätzlichen Aufdruck eingesetzt.

Hinsichtlich der anwendungstechnischen Eigenschaften müssen die als Ausgangsmaterialien dienenden, sogenannten Dekorrohpapiere bestimmte Anforderungen erfüllen. Dazu gehören hohe Opazität zur besseren Abdeckung der Unterlage, gleichmäßige Formation und Grammatur des Blatts für eine gleichmäßige Harzaufnahme, hohe Lichtbeständigkeit, hohe Reinheit und Gleichmäßigkeit der Farbe für gute Reproduzierbarkeit des aufzudruckenden Musters, hohe Nassfestigkeit für einen reibungslosen Imprägniervorgang, entsprechende Saugfähigkeit zur Erlangung des erforderlichen Harzsättigungsgrads, Trockenfestigkeit, die bei Umrollvorgängen in der Papiermaschine und beim Bedrucken in der Druckmaschine wichtig ist.

Zur Erzeugung einer dekorativen Oberfläche können die Dekorrohpapiere bedruckt werden. In erster Linie kommt das sogenannte Rotationstiefdruckverfahren zum Einsatz, in dem das Druckbild mit Hilfe mehrerer Gravurwalzen auf das Papier übertragen wird. Die einzelnen Druckpunkte sollen vollständig und möglichst intensiv auf die Papieroberfläche übertragen werden. Aber gerade im Dekortiefdruck wird nur ein geringer Teil der auf der Gravurwalze vorhandenen Rasterpunkte auf die Papieroberfläche übertragen. Es entstehen sogenannte Missing Dots, d.h. Fehlstellen. Häufig dringt die Druckfarbe zu tief in das Papiergefüge ein, wodurch die Farbintensität verringert wird. Voraussetzungen für ein gutes Druckbild mit wenig Fehlstellen und hoher Farbintensität sind eine möglichst glatte und homogene Oberflächentopografie und ein abgestimmtes Farbannahmeverhalten der Papieroberfläche.

Aus diesem Grunde werden Rohpapiere gewöhnlich mit sogenannten Softkalandern, teilweise auch sogenannten Januskalandern geglättet. Diese Behandlung kann zu Quetschungen der Papieroberfläche und damit zu deren Verdichtung führen, was sich nachteilig auf die Harzaufnahmefähigkeit auswirkt.

Die vorgenannten Eigenschaften werden wesentlich von der Imprägnierung des Dekorrohpapiers, d.h. von der Art des eingesetzten Imprägniermittels beeinflusst.

Die für die Imprägnierung der Dekorrohpapiere üblicherweise eingesetzten Tränkharzlösungen sind Harze auf der Basis von Harnstoff-, Melamin- oder Phenolharzen und formaldehydhaltig und führen zu spröden Produkten mit schlechter Weiterreißfestigkeit und Bedruckbarkeit.

Es ist in letzter Zeit zunehmend darauf zu achten, dass die zur Imprägnierung von Dekorrohpapieren verwendeten Tränkharzlösungen frei von gesundheitsschädlichen Substanzen, insbesondere formaldehydfrei, sind. Des Weiteren sollten die eingesetzten Bestandteile zu einem möglichst hohen Anteil aus nachwachsenden Rohstoffen stammen.

In der DE 197 28 250 A1 ist der Einsatz formaldehydfreier Harze auf der Basis eines Styrol/Acrylsäureester-Copolymers zur Herstellung vergilbungsfreier Vorimprägnate beschrieben. Nachteilig an diesem Material ist, dass es zu einem Produkt mit schlechter Spaltfestigkeit und nicht ausreichender Haftung nach dem Verkleben führt.

Formaldehydfreie Tränkharzlösungen zur Imprägnierung von Dekorrohpapieren sind auch in der EP 0 648 248 A1 und EP 0 739 435 A1 beschrieben. Diese bestehen vorzugsweise aus einem Styrol-Acrylsäureester-Copolymer und Polyvinylalkohol. Das mit einer solchen Tränkharzlösung imprägnierte Papier ist jedoch hinsichtlich der Spaltfestigkeit und der Haftung nach dem Verkleben auch noch verbesserungsfähig.

In der WO 2001/11139 A1 ist eine formaldehydfreie Zusammensetzung aus einem Bindemittel, einer wässrigen Polymerdispersion und Glyoxal vorgeschlagen, die die Herstellung von spaltbeständigen Dekorpapieren ermöglicht. Das mit dieser Zusammensetzung imprägnierte Papier lässt sich jedoch nicht gut verkleben.

In der WO 2009/000769 A1 wird zur Imprägnierung eine formaldehydfreie Zusammensetzung aus einem Styrol-Acrylsäureester-Copolymer und einer Stärke mit einer bestimmten Molekulargewichtsverteilung beschrieben. Die Haftung nach dem Verkleben eines solchen Vorimprägnats ist aber noch verbesserungsfähig.

Die DE 100 46 770 A1 beschreibt kationische, feinteilige, wässrige Polymerdispersionen, die aus 20 bis 60 Gew.-% mindestens eines ggf. substituierten Styrols (Komponente a), 40 bis 60 Gew.-% mindestens eines C₁-C₁₈-(Meth)Acrylsäureesters (Komponente b) und 0 bis 20 Gew.-% mindestens eines von a) und b) verschiedenen, nichtionischen, ethylenisch ungesättigten Monomers (Komponente c) bestehen. Diese kationischen, feinteiligen, wässrigen Polymerdispersionen werden zur Masse- und Oberflächenleimung von Papier, Pappe und Karton vorgeschlagen. Dabei wird als Komponente b) besonders bevorzugt ein n-Butylacrylat und als Komponente c) beispielsweise ein Hydroxymethylmethacrylat eingesetzt.

### ZUSAMMENFASSUNG DER ERFINDUNG

Der Erfindung liegt daher die Aufgabe zugrunde, ein formaldehydfreies Vorimprägnat bereitzustellen, das die oben genannten Nachteile nicht aufweist und sich insbesondere durch gute Haftung nach dem Verkleben auf eine Holzwerkstoffplatte, eine hohe Spaltfestigkeit auch unmittelbar nach dem Verkleben im feuchten Zustand, eine gute Bedruckbarkeit und eine gute Planlage beim Bedrucken und Kaschieren auszeichnet.

Gelöst wird diese Aufgabe durch ein Vorimprägnat aus einem mit einer Tränkharzlösung imprägnierten Dekorrohpapier, wobei die Tränkharzlösung mindestens ein Styrol-Alkylacrylat-Hydroxyethyl(meth)acrylat-Copolymer und mindestens ein wasserlösliches Polymer enthält, wobei Alkyl die Bedeutung Methyl, Ethyl, Propyl und/oder Butyl hat und wobei die Masse des Tränkharzes im Vorimprägnat, gerechnet als Trockensubstanz, 10 bis 35 Gew.-%, bezogen auf das Flächengewicht des Rohpapiers beträgt.

Gegenstand der Erfindung ist ferner ein Dekorpapier oder dekorativer Beschichtungswerkstoff, das/der ausgehend von dem zuvor angegebenen Vorimprägnat erzeugt worden ist.

Überraschend wurde festgestellt, dass die erfindungsgemäß verwendete Tränkharzlösung besonders gut geeignet ist, da sie nicht nur zur Verbesserung der Spaltfestigkeit und der Haftung nach Verklebung auf eine Holzwerkstoffplatte der damit getränkten Papiere führt, sondern auch hinsichtlich anderer Eigenschaften wie Bedruckbarkeit,

Lackstand oder Vergilbung vergleichbar gute oder sogar bessere Ergebnisse als der Stand der Technik ermöglicht.

Darüber hinaus treten die sonst bei Verwendung hydrophiler Bindemittel üblichen Probleme beim Kaschieren (Verkleben bzw. Verleimen mit der Unterlage) der imprägnierten Papiere nicht auf. Das heißt, dass die erfindungsgemäße Tränkharzlösung die Herstellung von Vorimprägnaten mit guter Kaschierbarkeit ermöglicht.

Ein weiterer Vorteil besteht darin, dass das Vorimprägnat bei hohen Maschinengeschwindigkeiten kostengünstig hergestellt werden kann.

### BESCHREIBUNG DER BEVORZUGTEN AUSFÜHRUNGSFORMEN

Unter Vorimprägnat werden erfindungsgemäß mit Harz imprägnierte Papiere verstanden. Die Menge des Tränkharzes im Vorimprägnat kann vorzugsweise 10 bis 35 Gew.-%, insbesondere jedoch 12 bis 30 Gew.-%, bezogen auf das Flächengewicht des Dekorrohpapiers, betragen.

Die zu imprägnierenden Dekorrohpapiere sind Papiere, die weder eine Leimung in der Masse noch eine Oberflächenleimung erfahren haben. Sie bestehen im Wesentlichen aus Zellstoffen, Pigmenten und Füllstoffen und üblichen Additiven. Übliche Additive können Nassfestmittel, Retentionsmittel und Fixiermittel sein. Dekorrohpapiere unterscheiden sich von üblichen Papieren durch den sehr viel höheren Füllstoffanteil oder Pigmentgehalt und das Fehlen einer beim Papier üblichen Masseleimung oder Oberflächenleimung.

Das erfindungsgemäß verwendete Styrol-Alkylacrylat-Hydroxyethyl(meth)acrylat-Copolymer kann in Form eines Latices oder Dispersion in der Tränkharzflüssigkeit eingesetzt werden. Es hat den Anschein, dass das Vorhandensein von Hydroxyethyl(meth)acrylat (HEMA) im Copolymer für die mit der Erfindung verbundenen vorteilhaften Wirkungen gegenüber anderen Styrol-Alkylacrylaten verantwortlich ist.

Die Menge des Hydroxyethyl(meth)acrylat-Anteils im Styrol-Alkylacrylat-Hydroxyethyl(meth)acrylat-Copolymer kann vorzugsweise 0,5 bis 20 Gew.-%, bezogen auf die Masse des Acrylatanteils, insbesondere 1 bis 10 Gew.-%, betragen. Als besonders vorteilhaft hat sich der Anteil des erfindungsgemäß eingesetzten Comonomers von 3 bis 8 Gew.-% erwiesen.

Das Alkyl im Styrol-Alkylacrylat ist vorzugsweise ein Ethyl oder Butyl. Es können Copolymere als Gemische dieser Alkylgruppen im Alkylacrylat-Anteil verwendet werden.

Besonders bevorzugt weist das erfindungsgemäß eingesetzte Copolymer eine Glasübergangstemperatur (TG) von 35 bis 50°C auf.

Das erfindungsgemäß in der Tränkharzlösung eingesetzte wasserlösliche Polymer ist vorzugsweise Stärke oder ein Stärkedextrin.

Ein bevorzugtes Stärkedextrin bzw. modifizierte Stärke kann eine Molekulargewichtsverteilung, ausgedrückt durch einen Polydispersitätsindex Mw/Mn, von mindestens 6 aufweist. Bevorzugt werden Stärken, die einen Polydispersitätsindex von 6 bis 20 aufweisen. In einer besonderen Ausgestaltung weist eine modifizierte Stärke vorzugsweise folgende Molekulargewichtsverteilung der Stärkemoleküle auf:
- höchstens 6 Gew. % Moleküle mit einem Molekulargewicht von 0 bis 1.000 g/mol,
- 5 bis 20 Gew. % Moleküle mit einem Molekulargewicht von 1.000 bis 5.000 g/mol,
- 20 bis 40 Gew. % Moleküle mit einem Molekulargewicht von 5.000 bis 25.000 g/mol,
- 20 bis 45 Gew. % Moleküle mit einem Molekulargewicht von 25.000 bis 200.000 g/mol,
- 5 bis 22 Gew. % Moleküle mit einem Molekulargewicht von 200.000 bis 1.000.000 g/mol,
- 0,5 bis 5 Gew. % Moleküle mit einem Molekulargewicht von mehr als 1.000.000 g/mol.

Eine solche modifizierte Stärke ist im Handel erhältlich. Als Polydispersitätsindex wird üblicherweise das Verhältnis von gewichts- und zahlenmittlerer Molmasse Mw/Mn angegeben. Er gibt Auskunft über die Breite der Molekulargewichtsverteilungskurve.

Die Molekulargewichtsverteilung der modifizierten Stärken wurde mit Hilfe von Gelpermeationschromatografie (GPC) in üblicher Weise vom Stärke-Hersteller ermittelt. Die GPC-Analyse wurde mit einem Chromatographen mit Säulen Shodex KS durchgeführt. Das Elutionsmittel war 0.05 M NaOH bei einer Durchflussgeschwindigkeit von 1 ml/min. Die Kalibrierung erfolgte mit Pullulan-Standards mit bekannten Molekulargewichten.

Das Mengenverhältnis wasserlösliches Polymer/Polymerlatex in der Tränkharzlösung beträgt vorzugsweise 80/20 bis 20/80, bevorzugt wird jedoch ein Mengenverhältnis von 45/55 bis 65/35 und insbesondere 50/50 bis 60/40, jeweils bezogen auf die Masse des Tränkharzes (atro). Als wasserlösliches Polymer werden vorzugsweise Stärke oder Stärkederivate, insbesondere Stärkedextrin, die aus nachwachsenden Rohstoffen hergestellt werden können, eingesetzt. Gemäß einer weiteren Ausgestaltung der Erfindung kann Polyvinylalkohol zusätzlich eingesetzt werden.

Die Tränkharzlösung kann Pigmente und/oder Füllstoffe enthalten. Die Menge des Pigments und/oder Füllstoffs kann 1 bis 30 Gew.-% betragen, insbesondere 2 bis 20 Gew.-%. Die Mengenangabe bezieht sich auf die Bindemittelmasse (atro). Unter dem Begriff Bindemittel ist hier das den Polymerlatex und das wasserlösliche Polymer enthaltende Gemisch zu verstehen.

Die zur Herstellung der erfindungsgemäßen Vorimprägnate eingesetzte Tränkharzlösung weist einen Gesamtfeststoffgehalt, bezogen auf die Trockenmasse von 9 bis 40 Gew.-%, bevorzugt 20 bis 35 Gew.-% und insbesondere bevorzugt 26 bis 30 Gew.-%.

Bei der Herstellung der Tränkharzlösung kann zunächst die Stärke angesetzt werden, die entweder kalt, d.h. bei Raumtemperatur bis höchstens 60 °C im Wasser aufgelöst oder bei etwa 120 bis 145 °C gekocht wird. Dabei wird eine etwa 40 bis 45%ige Suspension mit einem pH-Wert von etwa 5 bis 6 erzeugt. Im nächsten Schritt erfolgt unter Berücksichtigung des gewünschten Feststoffgehalts und des Mengenverhältnisses Stärke/Latex die Zugabe einer etwa 50%igen Latex-Dispersion bei einem pH-Wert von 5 bis 10. In einem weiteren Schritt kann eine Pigment- oder Füllstoff-Zugabe erfolgen.

Das erfindungsgemäß zu imprägnierende Rohpapier kann einen hohen Anteil eines Pigments oder eines Füllstoffs enthalten. Der Anteil des Füllstoffs im Rohpapier kann bis zu 55 Gew.-%, insbesondere 8 bis 45 Gew.-%, bezogen auf das Flächengewicht, betragen. Geeignete Pigmente und Füllstoffe sind beispielsweise Titandioxid, Talkum, Zinksulfid, Kaolin, Aluminiumoxid, Calciumcarbonat, Korund, Aluminium- und Magnesiumsilikate oder deren Gemische.

Als Zellstoffe zur Herstellung der Rohpapiere können Nadelholzzellstoffe (Langfaserzellstoffe) und/oder Laubholzzellstoffe (Kurzfaserzellstoffe) verwendet werden. Auch der Einsatz von Baumwollfasern und Gemische derselben mit den zuvor genannten Zellstoffsorten können verwendet werden. Besonders bevorzugt wird beispielsweise eine Mischung aus Nadelholz-/Laubholz-Zellstoffen im Verhältnis 10:90 bis 90:10, insbesondere 20:80 bis 80:20. Aber auch der Einsatz von 100 Gew.-% Laubholz-Zellstoff hat sich als vorteilhaft erwiesen. Die Mengenangaben beziehen sich auf die Masse der Zellstoffe (atro).

Vorzugsweise kann das Zellstoffgemisch einen Anteil an kationisch modifizierten Zellstofffasern von mindestens 5 Gew.-%, bezogen auf das Gewicht des Zellstoffgemischs, enthalten. Als besonders vorteilhaft hat sich ein Anteil von 10 bis 50 Gew.-%, insbesondere 10 bis 20 Gew.-%, des kationisch modifizierten Zellstoffs im Zellstoffgemisch erwiesen. Die kationische Modifizierung der Zellstoffasern kann durch Reaktion der Fasern mit einem Epichlorhydrinharz und einem tertiären Amin erfolgen oder durch Reaktion mit quaternären Ammoniumchloriden wie Chlorhydroxypropyltrimethylammoniumchlorid oder Glycidyltrimethylammoniumchlorid. Kationisch modifizierte Zellstoffe sowie deren Herstellung sind beispielsweise aus DAS PAPIER, Heft 12 (1980) S.575-579 bekannt.

Die Rohpapiere können auf einer Fourdrinier-Papiermaschine oder einer Yankee-Papiermaschine hergestellt werden. Dazu kann das Zellstoffgemisch bei einer Stoffdichte von 2 bis 5 Gew.-% bis zu einem Mahlgrad von 10 bis 45°SR gemahlen werden. In einer Mischbütte können die Füllstoffe wie Titandioxid und Talkum, und Nassfestmittel zugesetzt und mit dem Zellstoffgemisch gut vermischt werden. Der so erhaltene Dickstoff kann bis zu einer Stoffdichte von etwa 1 % verdünnt und soweit erforderlich weitere Hilfsstoffe wie Retentionsmittel, Entschäumer, Aluminiumsulfat und andere zuvor genannte Hilfsstoffe zugemischt werden. Dieser Dünnstoff wird über den Stoffauflauf der Papiermaschine auf die Siebpartie geführt. Es wird ein Faservlies gebildet und nach Entwässerung das Rohpapier erhalten, welches anschließend noch getrocknet wird. Die Flächengewichte der erzeugten Papiere können 15 bis 300 g/m² betragen. Insbesondere geeignet sind jedoch Rohpapiere mit einem Flächengewicht von 40 bis 100 g/m².

Das Aufbringen der erfindungsgemäß zu verwendenden Tränkharzlösung kann in der Papiermaschine oder offline durch Aufsprühen, Tränken, Walzenauftrag oder Aufstreichen (Rakel) erfolgen. Besonders bevorzugt wird ein Auftrag über Leimpressen oder Filmpressen.

Die Trocknung der imprägnierten Papiere erfolgt in üblicher Weise mit Hilfe von IR- oder Walzentrocknern in einem Temperaturbereich von 120 bis 180 °C bis zu einer Restfeuchte von 2 bis 6 %.

Nach Trocknung können die so imprägnierten Papiere (Vorimprägnate) noch bedruckt und lackiert werden und anschließend nach üblichen Verfahren auf verschiedene Substrate, beispielsweise Spannplatten oder Faserplatten aufkaschiert werden.

Die folgenden Beispiele dienen der weiteren Erläuterung der Erfindung. Angaben in Gewichtsprozent beziehen sich auf das Gewicht des Zellstoffs, sofern nichts anderes angegeben ist. Mengenverhältnis bedeutet Verhältnis der Massen bzw. Gewichtsverhältnis.

### BEISPIELE

### Beispiel V-1 (Vergleich)

Es wurde eine Zellstoffsuspension angesetzt, indem ein Zellstoffgemisch aus 80 Gew.-% Eukalyptus-Zellstoff und 20 Gew.-% Kiefer-Sulfatzellstoff bei einer Stoffdichte von 5 % bis zu einem Mahlgrad von 33°SR (Schopper-Riegler) gemahlen wurde. Anschließend erfolgte die Zugabe von 1,8 Gew. % Epichlorhydrinharz als Nassfestmittel.

Diese Zellstoffsuspension wurde mit Aluminiumsulfat auf einen pH-Wert von 6,5 eingestellt. Danach wurde der Zellstoffsuspension ein Gemisch aus 30 Gew.-% Titandioxid und 5 Gew.-% Talkum, 0,11 Gew.-% eines Retentionshilfsmittels und 0,03 Gew.-% eines Entschäumers zugefügt und ein Dekorrohpapier mit einem Flächengewicht von etwa 50 g/m² und einem Aschegehalt von etwa 23 Gew.-% gefertigt. Die Gewichtsangaben beziehen sich auf das Gewicht des Zellstoffs (atro).

Dieses Rohpapier wurde in einer Leimpresse mit einer wässrigen Harzlösung von etwa 25 Gew.-% Feststoffgehalt, enthaltend Stärkedextrin (EMDEX^{®} B1102, Firma Emsland-Stärke, Emlichheim) und Styrol-Butylacrylat-Copolymerlatex (PLEXTOL^{®} X4340 Firma Polymer Latex, Marl) in einem Mengenverhältnis von 55:45, beidseitig imprägniert. Hierzu wurde zunächst ein 45%iger Stärkedextrinansatz vorbereitet und bis zu einer Konzentration von 25 Gew.-% mit Wasser verdünnt. Dann wurde die entsprechende Menge der 50%igen wässrigen Polymerdispersion zugegeben und die erhaltene Polymerlösung auf einen Feststoffgehalt von 30 Gew.-% mit Wasser verdünnt und mit Natronlauge auf pH 8,0 eingestellt.

Das imprägnierte Papier wurde anschließend bei einer Temperatur von etwa 120°C bis zu einer Restfeuchte von 2,5% getrocknet. Die Auftragsmenge der Tränkharzlösung nach Trocknung betrug 10 g/m².

Die Glasübergangstemperatur Tg des eingesetzten Latex (Copolymer) PLEXTOL^{®} X4340 beträgt 28°C.

### Beispiel A-1 (Erfindung)

Das wie in Beispiel V-1 hergestellte Rohpapier wurde in einer Leimpresse mit einer wässrigen Harzlösung mit 25% Feststoffgehalt, enthaltend Stärkedextrin EMDEX^{®} B1102 und ein Latex-Versuchsprodukt 1, das in gleicher Weise wie PLEXTOL^{®} X4340 herstellt wurde, bei dem jedoch 3% des Butylacrylats durch Hydroxyethylmethacrylat (HEMA) ersetzt wurde, in einem Mengenverhältnis von 55:45. Der eingesetzte Styrol-Butylacrylat-(Hydroxyethylmethacrylat)-Latex weist eine Glasübergangstemperatur Tg von 36°C auf.

### Beispiel B-1 (Erfindung)

Das wie in Beispiel V-1 hergestellte Rohpapier wurde in einer Leimpresse mit einer wässrigen Harzlösung mit 25% Feststoffgehalt, enthaltend Stärkedextrin EMDEX^{®} B1102 und ein Latex-Versuchsprodukt 2, das in gleicher Weise wie PLEXTOL^{®} X4340 herstellt wurde, bei dem jedoch 6% des Butylacrylats durch Hydroxyethylmethacrylat (HEMA) ersetzt wurde, in einem Mengenverhältnis von 55:45. Das eingesetzte Styrol-Butylacrylat-Hydroxyethylmethacrylat-Copolymer weist eine Glasübergangstemperatur Tg von 40°C auf.

### Beispiel B-2 (Erfindung)

Ein Vorimprägnat wurde hergestellt in gleicher Weise wie das Vorimprägnat B-1, das Mengenverhältnis Stärkedextrin zu Latex-Versuchsprodukt 2 in der Imprägnierharzlösung betrug jedoch 40:60.

### Beispiel B-3 (Erfindung)

Ein Vorimprägnat wurde hergestellt in gleicher Weise wie das Vorimprägnat B-1, das Mengenverhältnis Stärkedextrin zu Latex-Versuchsprodukt 2 in der Imprägnierharzlösung betrug jedoch 25:75.

### Beispiele C-1 bis C-3

Die Vorimprägnate wurden in derselben Weise wie in den beispielen B-1 bis B-3 beschrieben hergestellt; allerdings wurde als Latex das Versuchsproduct 3 der Polymer Latex, Marl verwendet. Dieser Latex ist ein Styrol-Ethylacrylat-Copolymer, bei dem etwa 6% des Ethylacrylatmonomers ersetzt ist durch Hydroxyethylmethacrylat (HEMA). Der Styrol-Ethylacrylat-(Hydroxyethylmethacrylat)-Latex hat eine Glasübergangstemperatur Tg von 39 °C. Die Imprägnierflüssigkeit wies ein Gewichtsverhältnis Latex zu Stärkedextrin con 45:55 im Beispiel C-1, 60:40 in Beispiel C-2 und 75: 25 in Beispiel C-3 auf.

### Beispiel V-2(Vergleich)

Das wie in Beispiel V-1 hergestellte Rohpapier wurde in einer Leimpresse mit einer wässrigen Harzlösung mit 25% Feststoffgehalt, enthaltend Stärkedextrin EMDEX^{®} B1102, Polyvinylalkohol MOWIOL^{®} 4-98 (Kuraray Europe GmbH, Frankfurt) und Latex PLEXTOL^{®} X4340 in einem Mengenverhältnis von 40:15:45.

Hierzu wurde zunächst ein 45%iger Stärkedextrinansatz und ein 10% MOWIOL^{®}-Ansatz vorbereitet entsprechend gemischt. Dann wurde die entsprechende Menge der 50%igen wässrigen Polymerdispersion zugegeben und die erhaltene Polymerlösung auf einen Feststoffgehalt von 30 Gew.-% mit Wasser verdünnt und mit Natronlauge auf pH 8,0 eingestellt.

### Beispiel A-2 (Erfindung)

Das wie in Beispiel V-1 hergestellte Rohpapier wurde in einer Leimpresse mit einer wässrigen Harzlösung mit 25% Feststoffgehalt, enthaltend Stärkedextrin EMDEX^{®} B1102, Polyvinylalkohol MOWIOL^{®} 4-98 und Latex-Versuchsprodukt 1, in einem Mengenverhältnis von 40:15:45.

### Beispiel B-4 (Erfindung)

Das wie in Beispiel V-1 hergestellte Rohpapier wurde in einer Leimpresse mit einer wässrigen Harzlösung mit 25% Feststoffgehalt, enthaltend Stärkedextrin EMDEX^{®} B1102, Polyvinylalkohol MOWIOL^{®} 4-98 und Latex-Versuchsprodukt 2, in einem Mengenverhältnis von 40:15:45.

### Beispiel B-4 (Erfindung)

Das wie in Beispiel V-1 hergestellte Rohpapier wurde in einer Leimpresse mit einer wässrigen Harzlösung mit 25% Feststoffgehalt, enthaltend Stärkedextrin EMDEX^{®} B1102, Polyvinylalkohol MOWIOL^{®} 4-98 und Latex-Versuchsprodukt 2, in einem Mengenverhältnis von 10:15:75.

Die Tabelle 1 zeigt die Ergebnisse der Prüfungen der erfindungsgemäß behandelten Papiere im Vergleich zum Stand der Technik. Geprüft wurden folgende Eigenschaften:

### Innere Gefügefestigkeit (Maß für die Spaltfestigkeit)

Die Messung erfolgte am Vorimprägnat mit Hilfe des Gefügefestigkeitsprüfers emcolBT (Hersteller: emco GmbH, Leipzig, Deutschland) gemäß der standarisierten Messmethode TAPPI 833-om 94. Das zu prüfende Material wird in einem 1 Zoll breiten Streifen mittels doppelseitigem Klebeband zwischen Amboss und5 Aluminiumwinkeln geklebt und in der Pressvorrichtung mit definierter Presskraft und Presszeit zusammengepresst. Fünf Proben werden gleichzeitig in die Probenaufnahme des Schlagwerks eingelegt und einer Schlagkraft mit einem Gewicht von 30 kg ausgesetzt.

### Trockenbruchkraft und Nassbruchkraft

Die Messung erfolgte am Vorimprägnat nach DIN-EN-ISO-1924 T2.

Die Prüfung der Haftfestigkeit und die TESA-Test-Prüfung werden an lackierten und auf eine Spanplatte kaschierten Mustern des Vorimprägnats vorgenommen.

### Lackierung von Vorimprägnat

Die Vorimprägnat-Muster werden 60 Sekunden lang bei 160°C vorgeheizt. Danach wird mit einer Rakel 10±1 g/m² des säurehärtenden Lacksystems IV-49 der Firma Plantagchemie, Detmold, aufgebracht. Die Trocknung der Muster erfolgt horizontal liegend im Trockenofen 45 Sekunden lang bei 160°C.

### Kaschierung von Vorimprägnat

Das lackierte Vorimprägnat wird mit einem Laborkaschierkalander auf eine Spanplatte aufgebracht. Zum Einsatz kommen handelsübliche Spanplatten(20x20 cm). Auf die Spanplatte wird einseitig ein Harnstoff-Harz-Leim-Lösung (Kaurit Leim 122 der BASF AG, Ludwigshafen, Pulver in Wasser mit 50 % Feststoffgehalt gelöst) mit einem Rakel aufgetragen, der Leimauftrag beträgt 35 ±5 g/m2 bezogen auf Feststoff. Auf die mit dem Leim versehene Spanplattenoberfläche wird das lackierte Vorimprägnatblatt aufgelegt, wobei die lackierte Seite von der Spanplatte weg angewandt angeordnet ist und das Blatt allseitig etwa 2 cm über die Spanplatte übersteht. Die mit dem Vorimpränat versehene Spanplatte wird dann durch den Kaschierkalander geschoben, wobei der Anpressdruck 80 N/mm, die Temperatur der Anpresswalze 180°C und die Vorschubgeschwindigkeit 2 m/min beträgt.

### Haftfestigkeit

Die Prüfung der Haftung beginnt direkt nach der Kaschierung. Dazu wird der ca. 2 cm breite über die Spanplatte seitlich überstehende Vorimprägnatstreifen senkrecht zur Plattenkante eingeschnitten. Die Breite der Streifen und der Abstand zueinander betragen 12 mm.

Jeder überstehende Streifen wird von Hand in einem Winkel von 60° von der Spanplatte weg ruckartig über einen dreieckigen Stab abgezogen. Das Abziehen erfolgt sofort nach der Kaschierung sowie nach einer Wartezeit von 2 Minuten, 5 Minuten, 10 Minuten. 30 Minuten und 24 Stunden. Bewertet wird die Fläche, die nach den Abziehvorgängen nicht mehr oder nicht mehr vollständig von dem Vorimprägnat abgedeckt wird. Die Auswertung erfolgt nach Noten (Note 1 = sehr gut bis Note 6 = ungenügend).

### TESA-Test

Der TESA-Test erfolgt in Anlehnung an die Werknorm IHD-W-463 des Instituts für Holztechnologie Dresden.
Zunächst werden die kaschierten Platten 24 h gelagert.
Dann werden in und quer zur Laufrichtung des Kaschierkalanders ca. 15 cm lange TESA-Filmstreifen (TESA Film Typ 4104) auf die kaschierte Platte aufgebracht und mit einer Testwalze (10kg) blasenfrei fixiert. Nach verschiedenen Zeiten (sofort, 1h, 2h) erfolgt der Abriss des TESA-Film-Streifens ruckartig in einem Winkel von 30°C von Hand. Bewertet wird die Fläche unter dem abgezogenen Teststreifen, im Idealfall erfolgt keine Papierspaltung Die Bewertung der TESA-Festigkeit erfolgt nach Noten (Note 1 = sehr gut bis Note 6 = ungenügend)

Die Versuchsergebnisse in Tabelle 1 ist zeigen, dass eine Erhöhung des Hydroxethylmethacrylatgehalts im Styrolalkyacrylat-Polymer in der Tränkharzlösung von 0 Gew.% auf 3 Gew.% und weiter auf 6 Gew.%, jeweils bezogen auf den Acrylatanteil, eine Steigerung der Gefügefestigkeit und der Trocken- und Nassbruchkraft des Vorimprägnats bewirkt und gleichzeitig die Haftung des Vorimprägnats auf der Spanplatte verbessert und die TESA-Festigkeit verbessert wird. Diese Verbesserung tritt sowohl bei der Verwendung des Stärkedextrins als wasserlösliches Polymer als auch bei der Verwendung von Mischungen von Stärkedextrin und Polyvinylakohol ein. Eine weitere Steigerung kann noch durch die Erhöhung des Anteils des Styrol-Alkylacrylat-Haydroxyethylmethacylat-Copolymer erfolgen.

**Tabelle 1 Zusammensetzung der Tränkharzlösung und Testergebnisse**

| | Latex Plextol X4340 Tg= 28°C | Latex Versuchsprodukt 1 3% HEMA Tg=36°C | Latex Versuchsprodukt 2 6%HEMA Tg=40°C | Latex Versuchsprodukt 3 6 % HEMA Tg=39°C | Dextrin EMDEX B1102 | PVA Mowiol 4-98 | Gefügefestigkeit | Trockenbruchkraft 1/q | Nassbruchkraft 1/q | Haftung UF-Leim | TESA-Test 2h |
|---|---|---|---|---|---|---|---|---|---|---|---|
| | Gew.-% (atro) | Gew.-% (atro) | Gew.-% (atro) | | Gew.-% (atro) | Gew.-% (atro) | J/m2 | N/mm² | N/mm² | Note | Note |
| V-1 | 45 | | | | 55 | 0 | 1420 | 68/38 | 25/23 | 3 | 4 |
| A-1 | | 45 | | | 55 | 0 | 1560 | 71/40 | 27/23 | 2 | 3 |
| B-1 | | | 45 | | 55 | 0 | 1620 | 74/42 | 30/25 | 1 | 2 |
| B-2 | | | 60 | | 40 | 0 | 1860 | 76/41 | 38/29 | 1 | 1 |
| B-3 | | | 75 | | 25 | 0 | 2020 | 75/40 | 56/32 | 2 | 1 |
| C-1 | | | | 45 | 55 | 0 | 1650 | 75/41 | 31/27 | 1 | 2 |
| C-2 | | | | 60 | 40 | 0 | 1800 | 76/43 | 39/30 | 2,5 | 1 |
| C-3 | | | | 75 | 25 | 0 | 2100 | 73/42 | 54/33 | 4 | 1 |
| V-2 | 45 | | | | 40 | 15 | 1300 | 67/35 | 25/22 | 2 | 4 |
| A-2 | | 45 | | | 40 | 15 | 1420 | 69/41 | 23/24 | 1 | 2,5 |
| B-4 | | | 45 | | 40 | 15 | 1510 | 70/41 | 26/22 | 1 | 2 |
| B-5 | | | 75 | | 10 | 15 | 2000 | 77/39 | 54/33 | 1 | 1 |

## Patentansprüche

1. Vorimprägnat aus einem mit einer Tränkharzlösung imprägnierten Dekorrohpapier, wobei die Tränkharzlösung mindestens ein Styrol-Alkylacrylat-Hydroxyethyl(meth)-acrylat-Copolymer und mindestens ein wasserlösliches Polymer enthält, wobei Alkyl die Bedeutung von Methyl, Ethyl, Propyl oder Butyl hat und wobei die Masse des Tränkharzes im Vorimprägnat, gerechnet als Trockensubstanz, 10 bis 35 Gew.-% bezogen auf das Flächengewicht des Dekorrohpapiers beträgt.

2. Vorimprägnat nach Anspruch 1, wobei das Styrol-Alkylacrylat-Hydroxyethyl(meth)-acrylat-Copolymer einem Anteil von 0,5 bis 20 Gew.-% Hydroxyethylmethacrylat, bezogen auf die Masse des Acrylatanteils, enthält.

3. Vorimprägnat nach Anspruch 2, wobei der Anteil an Hydroxyethyl(meth)acrylat 1 bis 10 Gew.-%, bezogen auf die Masse des Acrylatanteils, beträgt.

4. Vorimprägnat nach einem der Ansprüche 1 bis 3, wobei das Styrol-Alkylacrylat-Hydroxyethyl(meth)acrylat-Copolymer ein Styrol-Ethylacrylat-Hydroxyethylmethacrylat-Copolymer oder ein Styrol-Butylacrylat-Hydroxymethylmethacrylat-Copolymer ist.

5. Vorimprägnat nach einem der Ansprüche 1 bis 4, wobei das Copolymer eine Glasübergangstemperatur von 35 bis 50°C aufweist.

6. Vorimprägnat nach einem der Ansprüche 1 bis 5, wobei das wasserlösliche Polymer Stärke oder ein Stärkederivat ist.

7. Vorimprägnat nach Anspruch 6, wobei das wasserlösliche Polymer Stärkedextrin ist.

8. Vorimprägnat nach einem der Ansprüche 1 bis 7, wobei das Mengenverhältnis von wasserlöslichem Polymer und Copolymer 30/70 bis 80/20, bezogen auf die Masse des Tränkharzes (atro), beträgt

9. Vorimprägnat nach einem der Ansprüche 1 bis 8, wobei die Tränkharzlösung 1 bis 30 Gew.-% eines Pigments und/oder Füllstoffs enthält, bezogen auf die Masse (atro) des Gemischs aus Copolymer und wasserlöslichem Polymer.

10. Vorimprägnat nach Anspruch 9, wobei das Pigment Titandioxid, Kaolin, Bentonit und/oder Calciumcarbonat ist.

11. Vorimprägnat nach einem der Ansprüche 1 bis 10, wobei die Tränkharzlösung einen Feststoffgehalt von 9 bis 40 Gew.-% aufweist.

12. Dekorpapier oder dekorativer Beschichtungswerkstoff, enthaltend ein Vorimprägnat nach einem der Ansprüche 1 bis 11.

## Claims

1. A prepreg obtainable by impregnating a decorative base paper with an impregnating resin solution, wherein the impregnating resin solution contains at least one styrene-alkylacrylate-hydroxyethyl-(meth)acrylate copolymer and at least one water-soluble polymer, wherein alkyl has the meaning of methyl, ethyl, propyl, or butyl and wherein the mass of the impregnating resin in the prepreg, calculated as a dry substance, is 10 to 35% by weight of the basis weight of the decorative base paper.

2. The prepreg as recited in claim 1, wherein the styrene-alkylacrylate-hydroxyethyl(meth)-acrylate copolymer contains a faction from 0.5 to 20% by weight hydroxyethylmethacrylate relative to the weight of the acrylate component.

3. The prepreg as recited in claim 2, wherein the fraction of hydroxyethylmethacrylate is 1 to 10% by weight relative to the mass of the acrylate component.

4. The prepreg as recited in any of claims 1 to 3, wherein the styrene-alkylacrylate-hydroxyethyl-(meth)acrylate copolymer is a styrene-ethylacrylate- hydroxyethylmethacrylate copolymer or a styrene-butylacrylate-hydroxyethylmethacrylate copolymer.

5. The prepreg as recited in any of claims 1 to 4, wherein the copolymer has a glass transition temperature from 35 to 50°C.

6. The prepreg as recited in any of claims 1 to 5, wherein the water-soluble polymer is a starch or starch derivative.

7. The prepreg as recited in claim 6, wherein the water-soluble polymer is starch dextrin.

8. The prepreg as recited in any of claims 1 to 7, wherein the ratio of water-soluble polymer to copolymer is from 30/70 to 80/20 relative to the mass of impregnating resin (bone dry).

9. The prepreg as recited in any of claims 1 to 8, wherein the impregnating resin solution contains 1 to 30% by weight of a pigment and/or filler relative to the mass of the binding agent (bone dry).

10. The prepreg as recited in claim 9, wherein the pigment can be titanium dioxide, kaolin, bentonite and/or calcium carbonate.

11. The prepreg as recited in any of claims 1 to 10, wherein the impregnating resin solution has a solid content of 9 to 40% by weight.

12. A decorative paper or decorative coating material obtainable from a prepreg as recited in any of claims 1 to 11.

## Revendications

1. Préimprégné formé à partir d'un papier de base pour décoration imprégné de solution de résine d'imprégnation, **sachant que** la solution de résine d'imprégnation contient au moins un copolymère de styrène alkyl acrylate - hydroxyéthyle (méth) acrylate et au moins un polymère soluble à l'eau, sachant **que,** par alkyle on entend méthyle, éthyle, propyle ou butyle et sachant **que** la masse de la résine d'imprégnation, qui, contenue dans le préimprégné, est calculée en tant que substance sèche, est de 10 à 35 % en poids par rapport à la masse au mètre carré du papier de base pour décoration.

2. Préimprégné selon la revendication 1,
**sachant que** le copolymère styrène alkyl acrylate - hydroxy éthyle (meth) acrylate contient 0,5 à 20 % en poids de méthacrylate hydroxy éthyle (meth) par rapport à la masse de l'acrylate contenu.

3. Préimprégné selon La revendications 2, **sac hant que** la teneur en hydroxy éthyle (meth) acrylate est de 1 à 10 % en poids par rapport à la masse de l'acrylate contenu.

4. Préimpréggné selon l'une des revendications 1 à 3,
**sachant que** le copolymère de styrène alkyl acrylate - hydroxyéthyle (meth) acrylate est un copolymère styrène éthylacrylate - hydroxyéthyl (meth) acrylate ou un copolymère styrène butylakrylate - hydroxy-méthylméthacrylate.

5. Préimprégné selon l'une des revendications 1 à 4,
**sachant que** le copolymère présente une température de transition vitreuse de 35 à 50 °C.

6. Préimprégné selon l'une des revendications 1 à 5,
**sàchant que** le polymère soluble à l'eau est de l'amidon ou un dérivé d'amidon.

7. Préimprégné selon la revendication 6,
**sachant que** le polymère soluble à l'eau est de la dextrine d'amidon.

8. Préimpréggné selon l'une des revendications 1 à 7, **sachant que** le rapport quantitatif de polymère soluble à l'eau et de copolymère est de 30 / 70 à 80 / 20 en référence à la masse de la résine d'imprégnation (atro).

9. Préimpréggné selon l'une des revendications 1 à 8, **sachant que** la solution de résine d'imprégnation contient 1 à 30 % en poids de pigment et / ou de charge par rapport à la masse (atro) du mélange de copolymère et de copolymère soluble à l'eau.

10. Préimpréggné selon la revendication 9,
**sachant que** le pigment est du dioxyde de titane, du kaolin, de la bentonite et / ou du carbonate de calcium.

11. Préimpréggné selon l'une des revendications 1 à 10, **sachant que** la teneur en matières solides de la solution de résine d'imprégnation est de 9 à 40 % en poids.

12. Papier décoratif ou matériau de revêtement décoratif comprenant un préimprégné selon l*une des revendications 1 à 11.
